# EUROPEAN PATENT APPLICATION

(11) **EP 3 571 929 A1**
(43) Date of publication of application: **27.11.2019**
(21) Application number: 18741212.7
(22) Date of filing: 18.01.2018
(51) Int. Cl.: A22C 9/00, A23L 13/70, A23L 13/40, A23B 4/02

(54) **AUTOMATIC FEEDING APPARATUS OF SUB-MATERIAL OF MEAT PRODUCT**

(30) Priority: 19.01.2017 KR 20170009404
(71) Applicant: Metatek Co., Ltd., Nonsan-si, Chungcheongnam-do 32925 (KR); Bok, Young Ho, Suwon-si, Gyeonggi-do 16304 (KR); Bok, So Yeon, Suwon-si, Gyeonggi-do 16304 (KR)
(72) Inventor: BOK, Young Ho, Suwon-si Gyeonggi-do 16304 (KR); BOK, So Yeon, Suwon-si Gyeonggi-do 16304 (KR)
(74) Representative: Tribalyte Ideas
(86) International application number: PCT/KR2018/000848
(87) International publication number: WO 2018/135877

(57) **Abstract**

Automatic feeding apparatus of a sub-material of a meat product for automatically feeding a sub-material into meat during processing of meat. It comprises a needle pressing mechanism (2) and a sub-material supply container (3) can be easily detached and cleaned from an operating part (1). A pair of horizontal beams (5a, 5b) are arranged side by side on upper and lower portions of an operating part (1) provided on a guide bar (7), and coupling holes (2a, 3a) coupled respectively to the horizontal beams (5a, 5b) are formed on both side surfaces of the needle pressing mechanism (2) coupled to the operating part (1) and the sub-material supply container (3), such that the needle pressing mechanism (2) and the sub-material supply container (3) are locked), wherein the operating part (1) is configured to be moved up and down by a stroke set by an operating part driving means.

## Description

### TECHNICAL FIELD

The present invention relates to an automatic feeding apparatus of a sub-material of a meat product for automatically feeding a sub-material (salt solution or brine) into meat during processing the meat and, more specifically, to an automatic feeding apparatus of a sub-material of a meat product, which has an improved structure so that a needle pressing mechanism and a sub-material supply container can be easily detached from an operating part and cleaned.

### BACKGROUND ART

In recent years, there has been a rapid increase in the consumption of meat (for example, Korean beef, dairy beef, cow meat, poultry meat, pork meat, chicken meat, etc.) due to the rapidly westernized lifestyle, industrial development and income increase and thus consumer preference for meat is rapidly changing from the existing quantitative aspect to quality as the interest in life extension and health grows.

In general, the criteria for evaluation of the quality and taste of meat are mostly subjective but are commonly based on the degree of softness, juicy flavor, and the lightness and savoriness of the ending taste. To this end, it is necessary to improve the taste and flavor by softening the meat, removing the meat smell and maintaining the juicy savor and taste for a certain period of time after final cooking as well as preserving the color of the meat after processing.

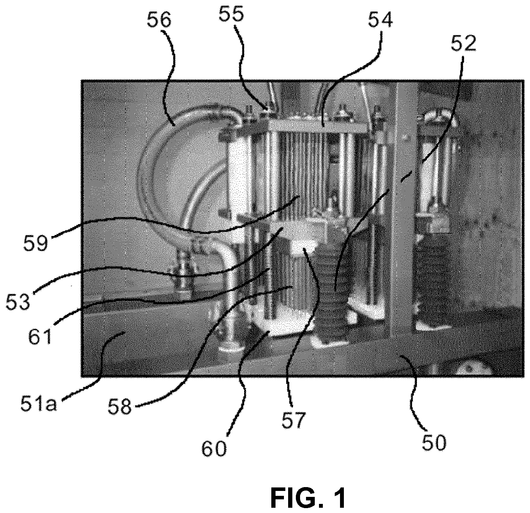

Fig. 1 is a photograph showing a conventional apparatus, in which a plurality of guide bars 52 are fixedly mounted on the upper portion of a base 51 having a path 51a through which a conveyor (not shown) passes, an operating part 53 is assembled with the guide bars 52 so as to move up and down, and a nut 55 is fixed on top of the upper portion of the guide bar 52.

In addition, a sub-material supply container 57 is installed at the lower portion of the operating part 53 and supplied with a sub-material through a sub-material supply tube 56, and a plurality of needles 58 are provided directly below the sub-material supply container 57 so as to inject the sub-material that is contained in the sub-material supply container 57 into a meat product (not shown).

A needle pressing mechanism 59 is provided on the upper portion of the operating part 53 so as to inject the sub-material into a meat product, wherein if a needle 58 strikes a bone when it is stuck into a meat product, the needle pressing mechanism 59 enables the needle 58 to be lifted and maintain the elasticity.

The needle 58 is inserted into each through hole of a pressure plate 60, which is lowered together with the needle 58 when the sub-material is injected into the meat product, wherein the pressure plate 60 presses the meat product at constant pressure by means of a compressed air cylinder 61 or spring at all times.

Accordingly, when a raw material is moved to a position directly below the operating part 53 in a state where the raw material is placed on the upper surface of the conveyor, then the operating part 53 is guided by a control unit (not shown) to the plurality of guide bars 52 and lowered.

As mentioned above, when the operating part 53 is lowered, the pressure plate 60 positioned at the lower portion of the operating part 53 presses the upper surface of the meat product. Herein, the pressure plate 60 presses the meat product at constant pressure by the compressed air cylinder 61 or the spring at all times.

Then, after the plurality of needles 58 are stuck in the meat product, a certain amount of a sub-material is supplied from the sub-material supply container 57 by a separate electrical control device (not shown) such that the sub-material spreads evenly inside the meat product.

In addition, if there is a bone in the meat product and thus any one or more of the needles 58 touch the bone, the corresponding needle 58 is lifted while pressing the needle pressing mechanism 59 and thus can be prevented from being broken.

### Prior Art Documents

[Patent Document 0001] Korean Reg. Patent Publication No. 10-1133156 Registered 28 March 2012.
[Patent Document 0002] Korean Reg. Utility Model Publication No. 20-231474 Published 10 May 2001.

### DETAILED DESCRIPTION OF THE INVENTION

### Technical Problem

However, such a conventional device has various problems that the device is mainly used for processing meat, which is protein-based, and uses a plurality of thin needles, resulting in the cross contamination and provision of breeding sites of bacteria. Therefore, such a conventional device requires frequent cleaning but has a complicated structure causing various problems as follows.

First, since the sub-material supply container and the needle pressing mechanism as well as the operating part are fitted with the plurality of guide bars, covered with covers and fixed with nuts, the disassembling and assembling work for cleaning them is troublesome and inconvenient.

Second, the sub-material supply container and the needle pressing mechanism have a relative motion relationship with each other and a complicated structural mechanism, and thus are not hygienic because the washability is reduced.

Third, a separate compressed air cylinder or spring is installed to maintain constant pressure at all times when a meat product is pressed using the pressure plate. In terms of the installation position, if such a compressed air cylinder or spring is installed above the meat product, the compressed air cylinder or spring caused contamination of the meat product due to the compressed air. In addition, it is difficult to maintain the hygiene thereof because of the complicated structure of an individual cylinder or spring. Meanwhile, if such a compressed air cylinder or spring is installed at the lower portion of the meat product, in order to transfer pressure to the pressure plate according to the movement of the sub-material supply container, it is required to have connection from the compressed air cylinder or spring that is installed at the lower portion to the sub-material supply container that is positioned at the upper portion. Therefore, the structure becomes complicated such that it is difficult to disassemble the sub-material supply container and the pressure plate.

Accordingly, the present invention has been made in an effort to solve the above-mentioned problems and disadvantages occurring in the prior arts and has an objective to enable a needle pressing mechanism for moving corresponding needles upwards, when there is a bone inside a meat product, and a sub-material supply container having a plurality of needles for injecting a sub-material into the meat product to be easily disassembled from or assembled with an operating part such that the disassembled needle pressing mechanism and the disassembled sub-material supply container are disinfected in a disinfecting solution (sterilized water or hot water), thereby preventing cross contamination and bacterial propagation beforehand and enabling the meat to be processed hygienically.

The present invention has another objective to press a needle at constant pressure at all time when an operating part is lowered, by providing, in a cylinder tube, a needle pressing member for uniformly pressing the needle so as to protect the needle from a hard object such as a bone when the needle moves down through a meat product depending on the vertical position of the needle, thereby removing a contamination source and promoting hygiene.

### Technical Solution

According to one aspect of the present invention to achieve the above objectives, there is provided an automatic feeding apparatus of sub-material of meat product, characterized in that a pair of horizontal beams are arranged side by side on upper and lower portions of an operating part provided on a guide bar, and coupling holes coupled respectively to the horizontal beams are formed on both side surfaces of the needle pressing mechanism coupled to the operating part and the sub-material supply container, such that the needle pressing mechanism and the sub-material supply container are locked by a locking means installed on the operating part in a state where the needle pressing mechanism and the sub-material supply container are assembled to the horizontal beams by the coupling holes, wherein the operating part is configured to be moved up and down by a stroke set by an operating part driving means.

### Advantageous Effects

Accordingly, the present invention has the effect of enabling a needle pressing mechanism for moving a needle upwards, when there is a bone inside a meat product, and a sub-material supply container having a plurality of needles for injecting a sub-material into the meat product to be easily disassembled from or assembled with an operating part, thereby preventing cross contamination and bacterial propagation beforehand and thus enabling meat to be processed hygienically.

### BRIEF DESCRIPTION OF DRAWINGS

Fig. 1 is a photograph showing a conventional device,
Fig. 2a is a perspective view showing a feeding apparatus of a sub-material according to the present invention,
Fig. 2b and Fig. 2c respectively show a sectional view taken along line A-A of Fig. 2a and a sectional view taken along line B-B,
Fig. 3 is an exploded perspective view showing principal parts of the present invention,
Fig. 4 is a perspective view of a disassembled sub-material supply container according to the present invention, and
Fig. 5 is a longitudinal sectional view showing the inside of a needle pressing mechanism when a needle is lowered.

### Brief Explanation of Reference Symbols

- 1:: operating part
- 2:: needle pressing mechanism
- 2a, 3a:: coupling holes
- 3:: sub-material supply container
- 4:: pressure plate
- 5a, 5b:: horizontal beams
- 6:: needle
- 7:: guide bar
- 8:: pressing part
- 9a, 9b:: first and second fixing elements
- 11:: valve main body
- 12:: valve
- 21:: coil spring
- 22:: sub-material supply hole
- 23:: motor
- 24:: driving link
- 25:: meat product
- 26:: bone
- 28:: leg member
- 29:: fixing plate

### BEST MODE FOR CARRYING OUT THE INVENTION

Reference will now be made in detail to embodiments of the present invention with reference to the accompanying drawings so that it can be readily carried out by a person skilled in the art to which the present invention belongs. The present invention may be embodied in many different forms and is not limited to the embodiments described herein. It is noted that the drawings are schematic and are not shown to scale. The relative dimensions and ratios of the parts in the figures are exaggerated or reduced in size for clarity and convenience in the figures, and any dimensions are merely illustrative and not restrictive. In addition, to the same structures, elements or parts appearing in more than one drawing, the same reference symbols are used to denote similar features.

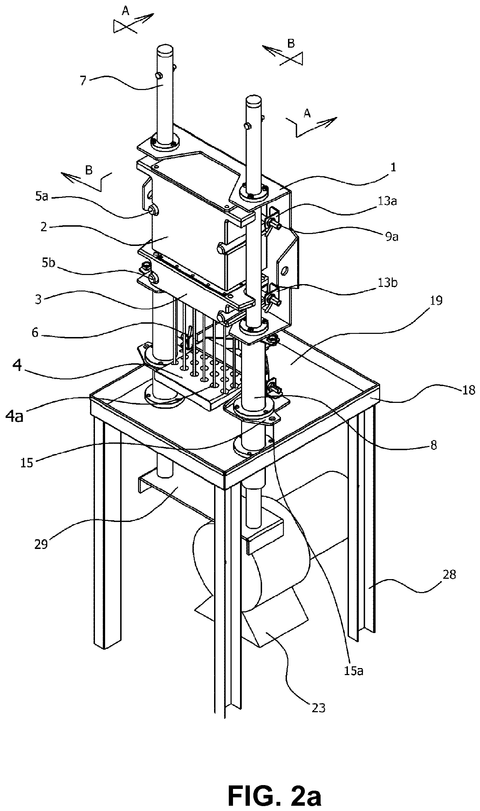

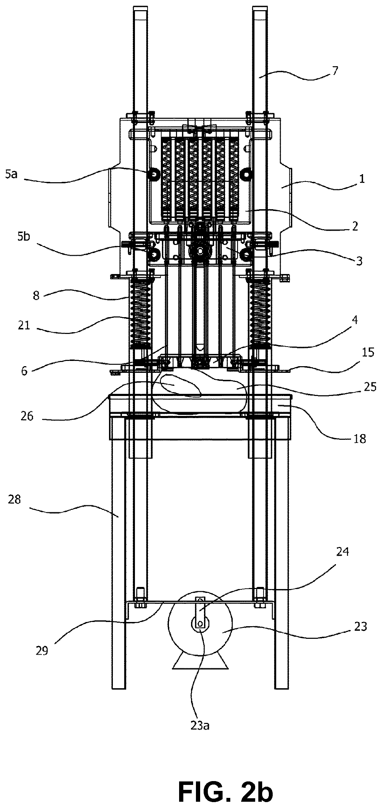

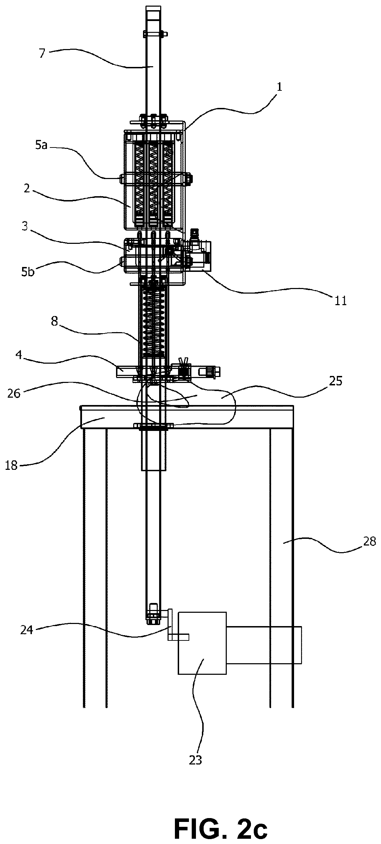

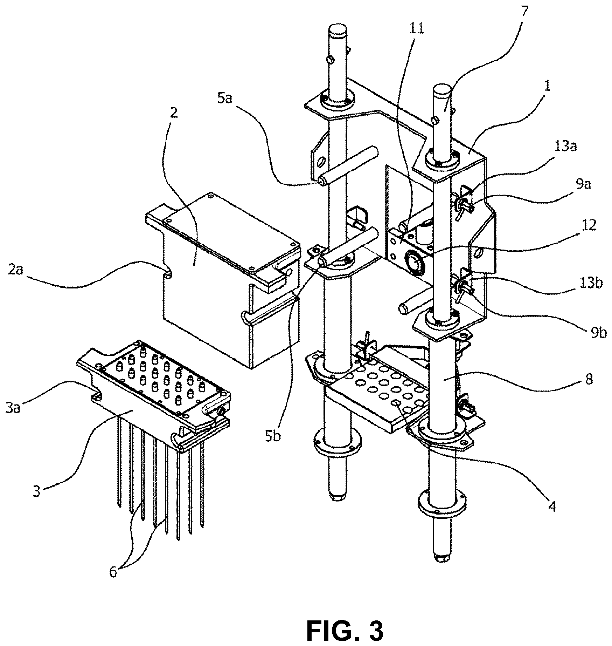

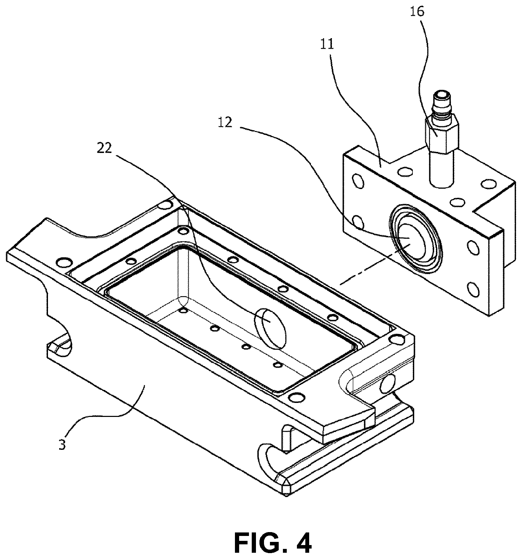

Fig. 2a to Fig. 2c are views respectively showing a feeding apparatus of a sub-material according to the present invention, Fig. 3 is an exploded perspective view showing principal parts of the present invention, and Fig. 4 is a perspective view of a disassembled sub-material supply container according to the present invention. Referring to Fig. 2 to Fig. 4, the present invention is configured in such a manner that one pair of horizontal beams 5a, 5b are arranged in parallel to each other at the upper and lower portions of an operating part 1 provided on one pair of guide bars 7 and coupling holes 2a, 3a coupled to the horizontal beams 5a, 5b are respectively formed in both side surfaces of a needle pressing mechanism 2 and a sub-material supply container 3, which are coupled to the operating part 1, such that the needle pressing mechanism 2 and the sub-material supply container 3 are locked or unlocked by a locking means in a state where the needle pressing mechanism 2 and the sub-material supply container 3 are assembled with the horizontal beams 5a, 5b in the front portion of the present invention.

A base 18 formed with a path 19 having a predetermined width is provided to be positioned at the lower portion of the operating part 1, to which the needle pressing mechanism 2 and the sub-material supply container 3 are coupled, the guide bars 7 are mounted on the base 18, and a conveyor (not shown) is provided at the lower portion of the base 18 and circulates in a predetermined orbit by a rotary drive source or a linear link drive source (not shown) for transferring a meat product 25 such that the meat product 25 can be transferred directly below a pressure plate 4.

In each of the drawings illustrating an embodiment of the present invention, the locking means includes first and second support pieces 13a and 13b, which are fixed to both upper and lower sides of the operating part 1, and first and second fixing elements 9a, 9b, which are inserted into the first and second support pieces 13a and 13b respectively so as to support the needle pressing mechanism 2 and the sub-material supply container 3. However, it can be understood that the needle pressing mechanism 2 and the sub-material supply container 3 can be detachably provided by using snap rings (not shown) at the front of the horizontal beams 5a and 5b.

If the cross sections of the horizontal beams 5a and 5b are formed in a circular, square or hexagonal shape and the coupling holes 2a and 3a formed in the needle pressing mechanism 2 and the sub-material supply container 3 are formed in a shape in which one side is opened, it is possible to carry out cleaning hygienically and quickly since parts of the coupling holes 2a and 3a are open in the state where the needle pressing mechanism 2 and the sub-material supply container 3 are separated from the horizontal beams 5a, 5b.

According to the present invention, a pressure plate pressurizing means for allowing a needle 6 to be lowered while the pressure plate 4 presses and supports the meat product 25 is provided to operate mechanically, wherein the pressure plate 4 is formed with the same number of holes 4a as the plurality of needles 6 so that the plurality of needles 6 are passed therethrough.

The pressure plate pressurizing means has a coil spring 21 or a fluid pressurizing mechanism installed outside the guide bar 7, as shown in Fig. 2b, and the lower portion of the pressing part 8 is connected to the pressure plate 4 which presses the meat product 15 when the operating part 1 is lowered.

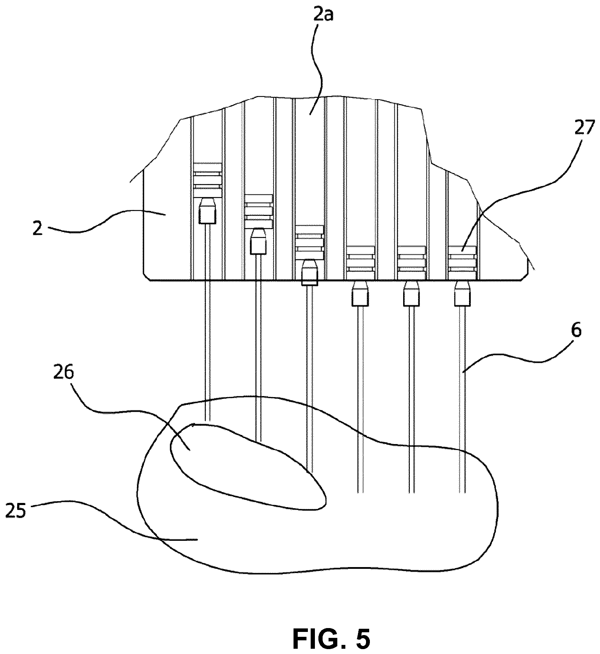

Fig. 5 is a longitudinal sectional view showing the inside of the needle pressing mechanism when a needle is lowered. Referring to Fig. 5, the needle pressing mechanism 2 has a plurality of through holes 2b formed therein, a needle pressing member 27 is installed inside each of the through holes 2b so as to be lifted or lowered, and a pressurized fluid or a coil spring (not shown) for pushing the needle pressing member 27 downwards is provided in a through hole 2b positioned at the upper portion of the needle pressing member 27.

According to the present invention described above, it is possible to allow the operating part 1 to be automatically lifted or lowered by a certain stroke by the operating part driving means.

That is, as shown in Fig. 2a to Fig. 2c showing an embodiment of the operating part driving means, the base 18 is fixed to the upper portions of leg members 28, one pair of guide bars 7 are installed on the base 18 so as to be move up and down, a fixing plate 29 is fixed to the lower ends of the guide bars 7, and a driving link 24 is fixed to the rotating shaft 23a of a motor 23 serving as a drive source with one end and hinge-coupled to the fixing plate 29 with the other end.

However, it can be understood that the operating part 1 may be manually lifted or lowered.

Hereinafter, the operation of the present invention will be described as follows.

First, the meat product 25 to be placed directly below the pressure plate 4 is fed on the conveyor or manually and then the guide bar 7 on which the operating part 1 is fixed is lowered.

That is, when power is supplied to the motor 23 by operating the control unit (not shown) in the state shown in Fig. 2b showing an embodiment, the one pair of guide bars 7 are gradually lowered by the driving link 24 connected to the rotating shaft 23a of the motor 23 and thus the operating part 1 and the pressure plate 4 are lowered together such that the pressure plate 4 touches the meat product 25 positioned directly below the pressure plate 4.

If the operating part 1 is further lowered together with the guide bar 7 in this state, the coil spring 21 installed inside the pressing part 8 is compressed by the lower end of the operating part 1 and the operating part 1, which is provided with the needle pressing mechanism 2 and the sub-material supply container 3, is lowered such that the pressure plate 4 presses the meat product 25 and the plurality of needles 6 are stuck into the meat product 25.

When the needle pressing mechanism 2 and the sub-material supply container 3 are lowered simultaneously in association with the lowering of the operating part 1 and thus the needles 6 provided to the sub-material supply container 3 are stuck into the meat product 25, if there is a bone 26 in the meat product 25, the needle 6 touching the bone cannot be lowered any more even if the sub-material supply container 3 is lowered. The needle 6 is not lowered any more but pushes up the needle pressing member 27 installed in the path 2b of the needle pressing mechanism 2 such that the needle 6 is prevented from being broken or bent by the bone 26.

In the process that the operating part 1 is lowered and the plurality of needles 6 are stuck into the meat product 25 through the above-mentioned operations, if the valve 12 that is mounted in the valve main body 11 and movable back and forth opens a sub-material supply hole 22 of the sub-material supply container 3 electrically or mechanically, the operating part 1 is positioned at a bottom dead center and the sub-material is supplied at constant pressure through a sub-material supply tube 16 by a pump and the like (not shown) such that the sub-material in the sub-material supply container 3 is evenly injected into the meat product 25.

To the contrary, once the injection of the sub-material into the meat product 25 is completed for a set time, the valve 12 closes the sub-material supply hole 22 just before the one pair of guide bars 7 provided with the operating part 1 is lifted and the needles 6 are drawn out of the meat product 25 at the same time. After that, the pressure plate 4 that presses the meat product 25 is lifted to a top dead center as shown in Fig. 2b such that the driving of the motor 23 is stopped and accordingly the injection of the sub-material into the meat product 25 is completed.

Meanwhile, it is possible to control the configuration of automatically stopping the driving of the motor 23 by installing a limit switch or a sensor (not shown) for detecting whether the operating part 1 is positioned at the top dead center.

After the injection of the sub-material is completed according to the present invention, in order to well maintain the hygienic conditions of the needle pressing mechanism 2 and the sub-material supply container 3, it is necessary to separate the needle pressing mechanism 2 and the sub-material supply container 3 from the operating part 1 and to clean the needle pressing mechanism 2 and the sub-material supply container 3. According to the present invention, since the horizontal beams 5a and 5b are fitted in the coupling holes 2a and 3a of the needle pressing mechanism 2 and the sub-material supply container 3, the needle pressing mechanism 2 and the sub-material supply container 3 can be separated in the front of the apparatus by simply releasing the fixing elements 9a and 9b provided at the upper and lower portions of the operating part 1. Therefore, the present invention has the advantages that not only quick cleaning, but also hygienic cleaning can be performed by removing the contaminants stuck in the coupling holes 2a and 3a therefrom since the coupling holes 2a and 3a are open to one side.

Furthermore, in such a cleaning-completed state, the needle pressing mechanism 2 and the sub-material supply container 3 are fitted with the horizontal beams 5a and 5b by pushing the coupling holes 2a and 3a formed in the needle pressing mechanism 2 and the sub-material supply container 3 onto the horizontal beams 5a and 5b and then the first and second fixing elements 9a, 9b are locked, thereby finishing assembly in a manner opposite to that described above.

Although the embodiments of the present invention have been described with reference to the accompanying drawings hereinabove, a person skilled in the art, to which the present invention belongs, could understand that the present invention may be embodied in other specific forms without departing from its technical spirit or essential characteristics.

Therefore, it should be understood that the above-described embodiments are to be considered in all respects as illustrative and not restrictive, and the scope of the present invention described in the foregoing description is defined by the appended claims, and all changes or variations derived from the meaning and range of the claims and the equivalency thereof are to be construed as being included within the scope of the present invention.

## Claims

1. An automatic feeding apparatus of sub-material of meat product, **characterized in that** a pair of horizontal beams (5a, 5b) are arranged side by side on upper and lower portions of an operating part (1) provided on a guide bar (7), and coupling holes (2a, 3a) coupled respectively to the horizontal beams (5a, 5b) are formed on both side surfaces of a needle pressing mechanism (2) and a sub-material supply container (3), which are coupled to the operating part (1), such that the needle pressing mechanism (2) and the sub-material supply container (3) are locked by a locking means installed on the operating part (1) in a state where the needle pressing mechanism (2) and the sub-material supply container (3) are assembled with the horizontal beams by the coupling holes (2a, 3a), wherein the operating part (1) is configured to be moved up and down by a stroke set by an operating part driving means.

2. An automatic feeding apparatus of sub-material of meat product according to claim 1, wherein the horizontal beam 5a and 5b has a circular or polygonal cross section, and the coupling holes (2a), (3a) formed in the needle pressing mechanism (2) and the sub-material supply container (3) have a shape in which one side is open.

3. An automatic feeding apparatus of sub-material of meat product according to claim 1, wherein locking means comprises first and second support pieces (13a), (13b) fixed to both the upper and lower sides of the operating part (1) and having a hole respectively, and first and second fixing elements (9a), (9b) inserted and fixed in the holes of the first and second support pieces (13a), (13b) so as to support the needle pressing mechanism (2) and the sub-material supply container (3).

4. An automatic feeding apparatus of sub-material of meat product according to claim 1, wherein the operating part driving means includes:
- a base (18) fixed to the upper portions of leg members (28);
- one pair of guide bars (7) liftingly installed on the base (18) and to which the upper portion of the operating part (1) is fixed;
- a fixing plate (29) fixed to the lower ends of the guide bars (7);
- a motor (23) serving as a driving source; and
- a driving link (24), of which one end is fixed to the rotating shaft (23a) of the motor (23) and the other end is hinge-coupled to the fixing plate (29).
